# EUROPÄISCHE PATENTANMELDUNG

(11) **EP 3 075 434 A1**
(43) Veröffentlichungstag der Anmeldung: **05.10.2016**
(21) Anmeldenummer: 15162409.5
(22) Anmeldetag: 02.04.2015
(51) Int. Cl.: B01D 53/86, C01B 17/765

(54) **KONTINUIERLICHES VERFAHREN ZUR REINIGUNG VON SO2-HALTIGEN GASEN**

(71) Anmelder: Bayer Technology Services GmbH, 51368 Leverkusen (DE)
(72) Erfinder: Erkes, Bernd, 41379 Brüggen (DE); Weber, Torsten, 42799 Leichlingen (DE); Fernandez Lopez, Lucia, 50670 Köln (DE)
(74) Vertreter: BIP Patents

(57) **Zusammenfassung**

Die vorliegende Erfindung betrifft ein kontinuierliches Verfahren zur Reinigung eines Gases enthaltend 60 bis 99 Vol.-% SO₂ (Schwefeldioxid) und 1 bis 40 Vol.-% Wasserdampf mit nachfolgender Herstellung von SO₃ (Schwefeltrioxid) ohne vorherige Gastrocknung, sowie eine Vorrichtung zur Durchführung dieses Verfahrens.

## Beschreibung

Die vorliegende Erfindung betrifft ein kontinuierliches Verfahren zur Reinigung eines Gases enthaltend 60 bis 99 Vol.-% SO₂ (Schwefeldioxid) und 1 bis 40 Vol.-% Wasserdampf unter Zugabe von Luft oder sauerstoffangereicherter Luft zur nachfolgenden Herstellung von SO₃ (Schwefeltrioxid) sowie eine Vorrichtung zur Durchführung dieses Verfahrens. Insbesondere betrifft die vorliegende Erfindung ein kontinuierliches Verfahren und eine Vorrichtung zur Reinigung eines SO₂-haltigen Gases mit nachfolgender Herstellung von SO₃, wobei ein SO₂-haltiges Gas mit einem SO₂-Gehalt von 60 bis 99 Vol.-% und mit einem Wasserdampfgehalt von 1 bis 40 Vol.-% mit Luft oder sauerstoffangereicherter Luft abgemischt wird und nachfolgend einer Vorrichtung umfassend einen Röhrenkontaktapparat, dem ein SO₂-Absorptions- und Desorptionssystem (regenerative SO₂-Gaswäsche) vorgeschaltet und dem eine oder mehrere Kontaktstufen und/oder ein oder mehrere SO₃-Absorber nachgeschaltet sind, zugeführt wird. Zusätzlich kann dem SO₂-Absorptions- und Desorptionssystem noch eine Nassgaswäsche, beispielsweise umfassend eine Quenche und ein oder mehrere Nasselektrofilter, vorgeschaltet sein. Der Röhrenkontaktapparat ist dabei vorzugsweise ein stehender Wärmetauscher aus ein oder mehreren Doppelmantelrohren, die ein Innenrohr und ein Außenrohr aufweisen, wobei ein Katalysator in den Innenrohren eingefüllt ist und die Wärmeübertragung um diese Innenrohre durch ein im Zwischenraum aus Innen- und Außenrohr geführtes Medium erfolgt, um den Katalysator einerseits aktiv zu halten, andererseits ein thermische Schädigung des Katalysators zu vermeiden. Die bei der Oxidation des SO₂ zu SO₃ freiwerdende Wärme wird vom Medium im Zwischenraum aus Innen- und Außenrohr des Röhrenkontaktapparats dann über einen Zwischenkreislauf abgeführt, wobei je nach SO₂-Gehalt des Reichgases eine kontinuierliche Wärmeabfuhr oder Wärmezufuhr erfolgt. Das SO₂-haltige Gas wird dabei vor der Einleitung in den Röhrenkontaktapparat nicht getrocknet und das aus dem dem Röhrenkontaktapparat nachgeschalteten SO₃-Absorber strömende Gas wird wieder dem Gasstrom vor dem SO₂-Absorber der regenerativen SO₂-Gaswäsche zugeführt.

Im Sinne der vorliegenden Erfindung werden SO₂-haltigen Gase mit einem SO₂-Gehalt von 50 Vol.-% und mehr auch SO₂-Reichgase oder kurz Reichgase genannt. Als Medium wird erfindungsgemäß bevorzugt Luft eingesetzt.

Bei vielen chemischen Prozessen sowie bei Verbrennungsprozessen unter Beteiligung von schwefelhaltigen bzw. schwefelverbindungshaltigen Stoffen, ebenso wie bei metallurgischen Prozessen fallen SO₂-haltige Gase als Abgase an. Diese können nicht ungereinigt in die Umwelt abgegeben werden, da SO₂ giftig ist und korrosiv wirkt. Darüber hinaus ist SO₂ der Hauptgrund für den sogenannten "sauren Regen". Daher ist der Ausstoß von SO₂ gesetzlich reglementiert.

Auf der anderen Seite ist es möglich, das bei den vorgenannten Prozessen entstehende SO₂ zur Herstellung von SO₃ zu nutzen, welches dann weiter zur Herstellung von Schwefelsäure oder Oleum genutzt werden kann. Eine Möglichkeit, das bei den vorgenannten Prozessen entstehende SO₂ der weiteren Nutzung zuzuführen besteht in der Aufreinigung des SO₂ durch regenerative SO₂-Gaswäsche, aus der das Reichgas erhalten wird.

Zur Reinigung der SO₂-haltigen Abgase werden sie zunächst in einen ersten Absorber, einen Gaswäscher, geleitet, wo mittels einer wässrigen Waschflüssigkeit der SO₂-Gehalt im Abgas soweit gemindert wird, dass er den jeweiligen gesetzlichen Bestimmungen entspricht und das so gereinigte Abgas in die Umwelt abgegeben werden kann. Dafür geeignete Waschflüssigkeiten sind Stand der Technik und dem Fachmann bekannt. Da zum einen die Waschflüssigkeit wegen der hohen SO₂-Last ebenfalls nicht in die Umgebung abgegeben werden kann, zum anderen das SO₂ zur Herstellung von SO₃ gebraucht werden kann, wird das SO₂ wieder aus der Waschflüssigkeit desorbiert, vorzugsweise thermisch. Das dabei gewonnene SO₂-Reichgas weist einen SO₂-Gehalt von 60 - 99 Vol.-% und einem Wasserdampfgehalt von 1 bis 40 Vol.-% auf.

Als besonders effizientes Verfahren zur Herstellung von SO₃ aus SO₂ ist das aus der WO2008052649A1 bekannte Verfahren. Die Offenbarung der WO2008052649A1 wird hiermit durch Bezugnahme vollständig in die vorliegende Beschreibung aufgenommen. Jedoch wurde dieses Verfahren bislang nur mit zuvor getrockneten SO₂-haltigen Gasen betrieben, deren Wassergehalt unter 0,1 Vol.-%, meist unter 0,01 Vol.-% lag. Grund für den geforderten geringen Wassergehalt war die Befürchtung, dass sich das SO₂ mit dem Wasser zu schwefliger Säure und/oder dem ebenfalls vorhandenen Sauerstoff zu SO₃ und dieses wiederum mit dem Wasser zu Schwefelsäure umsetzte. Schweflige Säure und Schwefelsäure wirken stark korrosiv auf die Wandungen der Apparate der Vorrichtung, die daher stärker und/oder mit korrosionsfesterem Material hätten ausgelegt werden müssen, was die Apparate teurer gemacht hätte. Weiterhin bestand die Befürchtung, dass durch die im SO₃-Absorber in der Gasphase entstehende Schwefelsäure zu erheblicher Schwefelsäurenebelbildung führe, welche mit sehr aufwändigen und kostenintensiven Maßnahmen aus dem Gasstrom hinter dem SO₃-Absorber hätte entfernt werden müssen. Dieser Umstand führt dazu, dass die Vorrichtungen gemäß der WO2008052649A1, in denen das entsprechende Verfahren durchgeführt wurde, mit einem Gastrockner versehen wurden, durch den der Wassergehalt SO₂-haltigen Gases bei Eintritt in den Röhrenkontaktapparat unter 0,1 Vol.-%, meist unter 0,01 Vol.-% gedrückt wurde.

Verfahren zur Oxidation von SO₂ zu SO₃ mit SO₂-haltigen Gasen, die einen Wassergehalt von 1 Vol.-% oder mehr aufweisen, sind aber aus dem Stand der Technik bekannt.

So offenbart WO2008064698A1 ein Verfahren zur Oxidation von SO₂-haltigem Gas, das einen Wassergehalt von bis zu 30 Vol.-% aufweist, wobei der SO₂-Gehalt ebenfalls bis zu 30 Vol.-% betragen kann. Dabei wird die entstehende Schwefelsäure zweistufig über Wärmetauscher kondensiert und abgeführt, wodurch extreme Schwefelsäurenebelbildung vermieden wird. Nachteilig an diesem Verfahren ist allerdings, dass es auf Grund der Kondensation apparativ und werkstofftechnisch sehr aufwändig ist und der Kondensator aufgrund der extrem korrosiven Bedingungen mit Rohren aus Quarzglas bestückt wird, was zu hohen Kosten sowie zu eingeschränkter mechanischer Belastbarkeit wegen der Gefahr des Glasbruchs führt. Außerdem ist der SO₂-Gehalt bei diesem Verfahren auf maximal 30 Vol.-% begrenzt.

WO2013045558A1 offenbart ein Verfahren zur Oxidation von SO₂-haltigen Gasen, das einen Wassergehalt von mindestens 0,1 % aufweist, wobei der SO₂-Gehalt weniger als 100 Vol-% beträgt. Dabei wird bereits nach dem ersten Durchlauf des SO₂- und wasserhaltigen Gases des Oxidationsschrittes das entstandene SO₃ in Wasser unter Bildung von Schwefelsäure aufgenommen und diese nach einem Kondensationsschritt abgeführt. Nachteilig an diesem Verfahren ist auch hier der Kondensationsschritt, der apparativ und energetisch aufwändig ist, was auch hier zu hohen Kosten führt.

Aufgabe der vorliegenden Erfindung ist es also, ein kontinuierliches Verfahren und eine Vorrichtung zur Reinigung von SO₂-haltigen Abgasen Verfügung zu stellen, mit denen es möglich ist, Gase mit hohem SO₂-Gehalt und hohem Wassergehalt ohne vorherige Gastrocknung katalytisch unter Bildung von SO₃ zu oxidieren. Verfahren und Vorrichtung sollen im Vergleich zum Stand der Technik energetisch und apparativ einfach zu gestalten und somit wirtschaftlich und kostengünstig sein. Insbesondere soll das Verfahren zur Oxidation einstufig sein und weder einen Verfahrensschritt zur Kondensation der aus dem gebildeten SO₃ entstandenen Schwefelsäure noch einen Verfahrensschritt zur Gastrocknung aufweisen. Die Vorrichtung soll zur Durchführung dieses Verfahrens geeignet sein und weder einen Apparat zur Kondensation der aus dem gebildeten SO₃ entstandenen Schwefelsäure noch einen Apparat zur Gastrocknung aufweisen.

Als SO₂-haltige Abgase im Sinne der vorliegenden Erfindung werden dabei die SO₂-haltigen Gase bezeichnet, die den ursprünglichen Entstehungsort des SO₂, beispielsweise den Verbrennungsprozess oder den metallurgischen Prozess verlassen haben und dem Gaswäscher zugeführt werden.

Gelöst wird die Aufgabe durch den Gegenstand der unabhängigen Ansprüche. Vorzugsweise Ausgestaltungen finden sich in den Unteransprüchen.

Hinsichtlich des Verfahrens wird die Aufgabe erfindungsgemäß gelöst durch ein Verfahren zur Reinigung eines SO₂-haltigen Abgases umfassend folgende Schritte:
(a) Einleiten des SO₂-haltigen Abgases in einen Gaswäscher und Absorption von SO₂ in der Waschflüssigkeit,
(b) Zuleiten der mit SO₂ beladenen Waschflüssigkeit in den Desorber, Desorption von SO₂ unter Entstehung von SO₂-haltigem Reichgas mit einem SO₂-Gehalt von 60 bis 99 Vol.-% und mit einem Wassergehalt von 1 bis 40 Vol.-% und Rückleiten der von SO₂ entladenen Waschflüssigkeit in den Gaswäscher,
(c) Zuleiten des SO₂-haltigen Reichgases zum Gasvorwärmer, wobei dem SO₂-haltigen Reichgas vor Eintritt in diesen Luft zugegeben wird
(d) Erwärmen des mit Luft versetzten SO₂-haltigen Reichgases im Gasvorwärmer, bevorzugt auf eine Temperatur von 380 bis 480 °C, besonders bevorzugt auf eine Temperatur von 400 bis 450 °C,
(e) Oxidation des im SO₂-haltigen Reichgas enthaltenen SO₂ zu SO₃ in einem Röhrenkontaktapparat,
(f) Absorption des entstandenen SO₃ in einem SO₃-Absorber,
(g) Ableiten von nicht im SO₃-Absorber absorbierten Gasen und Zuleiten dieser Gase in das SO₂-haltigen Abgas vor dessen Eintritt in den Gaswäscher,
wobei die Luft, die dem SO₂-haltigen Reichgases vor dem Eintritt in den Gasvorwärmer in Schritt (c) zugeben wird, eine gegenüber der Temperatur des SO₂-haltigen Reichgases deutlich erhöhte Temperatur aufweist, also vorgewärmt ist.

Vorzugsweise beträgt die Temperatur dieser Luft bei der Zugabe zum Reichgas in Schritt (c) von 300 bis 600 °C, bevorzugt von 380 und 560 °C, besonders bevorzugt von 400 bis 520 °C. Die Zusammensetzung des Gases nach Zugabe der Luft ist beispielsweise: 20 Vol.-% SO2, 16 Vol.-% 02, 60 Vol.-% N2, 4 Vol.-% H2O.

Wiederum vorzugsweise wird durch die Zuleitung von Luft in Schritt (c) ein O₂/SO₂-Volumenverhältnis von 0,5 bis 1,2, bevorzugt von 0,7 bis 1,1, besonders bevorzugt von 0,9 bis 1,0 eingestellt.

Vorzugsweise enthält das in Schritt (f) nicht im SO₃-Absorber absorbierte Gas unter 10, bevorzugt unter 5, besonders bevorzugt unter 2 Vol.-% SO₂, und an sonstigen Bestandteilen überwiegend Stickstoff und Sauerstoff.

Wiederum vorzugsweise wird diese Luft dem Zwischenkreislauf zur Zufuhr und/oder Abfuhr der Wärme zu oder von der Oxidation des SO₂ zu SO₃ im Zwischenraum aus Innen- und Außenrohr des Röhrenkontaktapparats entnommen.

In einer weiteren erfindungsgemäßen Ausführungsform kann zusätzlich zur Zugabe von Luft vor dem Eintritt des SO₂-haltigen Reichgases in den Gasvorwärmer vor dem Eintritt SO₂-haltigen Reichgases in den Gasvorwärmer auch Sauerstoff zugegeben werden. Dadurch wird der Sauerstoffgehalt des Reichgases erhöht, was die Umsetzung von SO zu SO₃ befördert.

In einer weiteren erfindungsgemäßen Ausführungsform kann zusätzlich dazu dem SO₂-haltigen Reichgases noch Luft und/oder Sauerstoff nach dem Austritt des SO₂-haltigen Reichgases aus dem Gasvorwärmer zugegeben werden. Dadurch kann zum einen der Gasvorwärmer kleiner gehalten und zum anderen dieser besser regelbar gemacht werden. Die Luft, die dem SO₂ nach dessen Austritt aus dem Gasvorwärmer zugegeben wird, ist vorzugsweise ebenfalls vorgewärmt und hat eine Temperatur von 300 bis 600 °C, bevorzugt von 380 und 560 °C, besonders bevorzugt von 400 bis 520 °C. Wiederum vorzugsweise wird auch diese Luft dem Zwischenkreislauf zur Zufuhr und/oder Abfuhr der Wärme zu oder von der Oxidation des SO₂ zu SO₃ im Zwischenraum aus Innen- und Außenrohr des Röhrenkontaktapparats entnommen.

Bevorzugt beträgt der SO₂-Gehalt des SO₂-Reichgases in Schritt (b) 80 bis 98 Vol.-% mit einem Wassergehalt von 20 bis 2 Vol.-%, besonders bevorzugt 90 bis 96 Vol.-% mit einem Wassergehalt von 10 bis 4 Vol.-%.

Durch die Zugabe der vorgewärmten Luft wird erreicht, dass in Strömungsrichtung des Reichgases an keiner Stelle des Verfahrens nach Zugabe der Luft die Taupunkte von schwefliger Säure und/oder Schwefelsäure erreicht oder unterschritten werden. Dadurch wird vermieden, dass sich schweflige Säure und/oder Schwefelsäure an den Wänden der Vorrichtung niederschlagen und Korrosion verursachen können. Die Zugabe von Sauerstoff, die in einigen Ausführungsformen vorgesehen ist, setzt die Temperatur des Reichgases nicht so weit hinunter, dass die Taupunkte von schwefliger Säure und/oder Schwefelsäure erreicht oder unterschritten werden, da zum einen der Sauerstoff trocken ist, zum anderen er im Verhältnis zur Luft nur in geringen Mengen zugegeben wird.

Das im Gaswäscher von SO₂ gereinigte Abgas kann dann - beispielsweise über einen Auslass - in die Umwelt abgegeben werden. Gegebenenfalls wird dieses Abgas vor oder nach dem ersten Gaswäscher noch weiteren Reinigungsschritten zur Entfernung weiterer umweltschädlicher Stoffe unterworfen.

In einer alternativen Ausführungsform des Verfahrens stammt die vorgewärmte Luft nicht aus dem Zwischenkreislauf, sondern wird auf eine andere Weise so vorgewärmt, dass sie bei der Zugabe zum SO₂-haltigen Reichgases eine Temperatur von Temperatur von 300 bis 600 °C, bevorzugt von 380 und 560 °C, besonders bevorzugt von 400 bis 520 °C aufweist. Vorrichtungen und Verfahren dafür sind dem Fachmann aus dem Stand der Technik bekannt.

Beim erfindungsgemäßen Verfahren ist es weder nötig, die aus dem gebildeten SO₃ entstandene Schwefelsäure zu kondensieren noch das Reichgas vor dem Eintritt in den Röhrenkontaktapparat zu trocknen.

Hinsichtlich der Vorrichtung wird die Aufgabe gelöst durch eine Vorrichtung umfassend folgende Komponenten: eine Zuleitung für das SO₂-haltige Abgas zum Gaswäscher, einen ersten Absorber zur Absorption des SO₂ in einer Waschflüssigkeit, einen Desorber zur Desorption des SO₂ aus der Waschflüssigkeit, wobei Gaswäscher und Desorber über einen Waschmittelkreislauf miteinander verbunden sind, eine Zuleitung für das im Desorber entstandene SO₂-Reichgases zum Röhrenkontaktapparat, wobei diese Zuleitung eine Einspeisung für Luft vorsieht, einen Röhrenkontaktapparat, einen SO₃-Absorber zur Absorption des im Röhrenkontaktapparat gebildeten SO₃, eine Rückführleitung zur Rückführung des Gasstroms aus dem SO₃-Absorber in die Zuleitung für das SO₂-haltige Abgas zum Gaswäscher. Vorzugsweise weist der Röhrenkontaktapparat einen Zwischenkreislauf zur Zufuhr oder/und Abfuhr von Wärme zu oder von der Oxidation des SO₂ zu SO₃ und der Zwischenkreislauf einen Kühler, ein Gebläse oder eine Pumpe und/oder einen Erhitzer auf. Die erfindungsgemäße Vorrichtung weist weder einen Apparat zur Kondensation der aus dem gebildeten SO₃ entstandenen Schwefelsäure noch einen Apparat zur Gastrocknung auf.

Als Medium für die Wärmezufuhr und/oder Wärmeabfuhr über den Zwischenkreislauf können grundsätzlich in Betracht gezogen werden Wärmeträgeröle, Salzlösungen oder Salzgemische, Dampf, Gase und Luft. Luft ist als Wärmetauschmedium bevorzugt, da sie zum einen billig ist, zum anderen Luft aus dem Zwischenkreislauf dazu genutzt werden kann, um in Schritt (c) dem SO₂-haltigen Reichgas zugegeben zu werden. In diesem Fall weist die erfindungsgemäße Vorrichtung eine Einspeiseleitung für vorgewärmte Luft auf , die dem SO₂-Reichgas vor Eintritt in den Gasvorwärmer zugeben wird, auf, wobei diese Einspeiseleitung an die Kreisleitung des Zwischenkreislauf angeschlossen ist.

Wenn dem Zwischenkreislauf Luft entnommen wird, muss ihm an geeigneter Stelle wieder die gleiche Menge Luft zugeführt werden, vorzugsweise hinter dem in Strömungsrichtung ersten Kühler des Zwischenkreislaufs und vor dem Gebläse des Zwischenkreislaufs.

Wird im Zwischenkreislauf nicht Luft, sondern werden beispielsweise Wärmeträgeröle, Salzlösungen oder Salzgemische als Wärmetauschmedium verwendet, so können diese dazu dienen, die in ihnen gespeicherte Wärme an anderer Stelle des vorliegenden Verfahrens oder auch in einem anderen Verfahren abzugeben. So kann beispielsweise der Gasvorwärmer durch ein solches Wärmetauschmedium erhitzt werden.

In einer Ausführungsform der erfindungsgemäßen Vorrichtung werden mehrere Röhrenkontaktapparate in Reihe oder parallel geschaltet.

In weiteren Ausführungsformen weist die Vorrichtung dem Röhrenkontaktapparat nachgeschaltet:
- eine oder mehrere Kontaktstufen, optional mit einem Oleum/Zwischenabsorber
- ein SO₃-Absorber und
- optional eine Abgasreinigungsanlage
auf.

Erfindungsgemäß können das Verfahren und die Vorrichtung, abhängig von der zugrunde zulegenden SO₂-Eingangskonzentration im Ausgangsgas und von der Art der benötigten Anlage als Neuanlage oder zum Nachrüsten einer bestehenden Anlage, in unterschiedlichen Konzepten realisiert werden.

Überraschend wurde gefunden, dass unter den erfindungsgemäßen Bedingungen das im Reichgas enthaltene SO₂ mit einem Umsatz von 70 % bis 99,9 % , bevorzugt von 80 % bis 99,5 %, besonders bevorzugt von 90 % bis 99 %, insbesondere von 93 bis 97 %, im Röhrenkontaktapparat zu SO₃ umgewandelt wurde, wobei das Reichgas nach dem Austritt aus dem Desorber einen Wassergehalt von 1 bis 40 Vol.-% hatte. Dabei konnte keine vermehrte Korrosion an den Apparaten festgestellt werden. Durch Rückführung der nicht im SO₃-Absorber absorbierten Gase in das SO₂-haltige Abgas vor dessen Eintritt in den Gaswäscher bzw. in den diesem optional vorgeschalteten Nassgaswäsche in Schritt (g) entfällt zudem die sehr aufwändige Abscheidung von Schwefelsäurenebel aus diesen nicht im SO₃-Absorber absorbierten Gasen.

Anhand der folgenden Prinzipschaltbilder und deren Beschreibung wird die Erfindung näher erläutert, ohne sie darauf zu beschränken.
Fig. 1 zeigt eine schematische Darstellung einer Vorrichtung zur kontinuierlichen katalytischen Oxidation von SO₂ zu SO₃ aus dem Stand der Technik. Diese Vorrichtung und das darin durchgeführte Verfahren ist bereits in Beispiel 4 und Fig. 5 der WO2008052649A1 ausführlich beschrieben.
Fig. 2 stellt ein Ausführungsbeispiel des erfindungsgemäßen Verfahrens dar, bei dem ein SO₂-Reichgas ohne vorherige Gastrocknung in einen Röhrenkontaktapparat geleitet wird.

### Bezugszeichenliste:

- 1: Gastrockner
- 2: Gasvorwärmer
- 3: SO₃-Absorber
- 4: Auslass (Kamin)
- 5: Röhrenkontaktapparat
- 6: Erhitzer
- 7: Kühler
- 8: Gebläse / Pumpe
- 9: Gaswäscher
- 10: Desorber
- a: Zuleitung für das SO₂-haltige Abgas
- b: Einspeiseleitung Sauerstoff
- c: Einspeiseleitung Luft d Einspeiseleitung von Luft in den Zwischenkreislauf
- e: Gasleitung zum SO₃-Absorber
- f: Gasleitung zum Auslass (Kamin)
- g: Gasleitung vom Gastrockner zum Röhrenkontaktapparat
- h: Gasleitung zur Zuleitung für das SO₂-haltige Abgas
- K: Kreisleitung Zwischenkreislauf (Kühlung/Erhitzung)
- j: Gasleitung vom SO₃-Absorber zum Gaswäscher
- L: Waschflüssigkeitskreislauf
- m: Gasleitung vom Desorber zum Röhrenkontaktapparat

### Beispiel 1 (Stand der Technik):

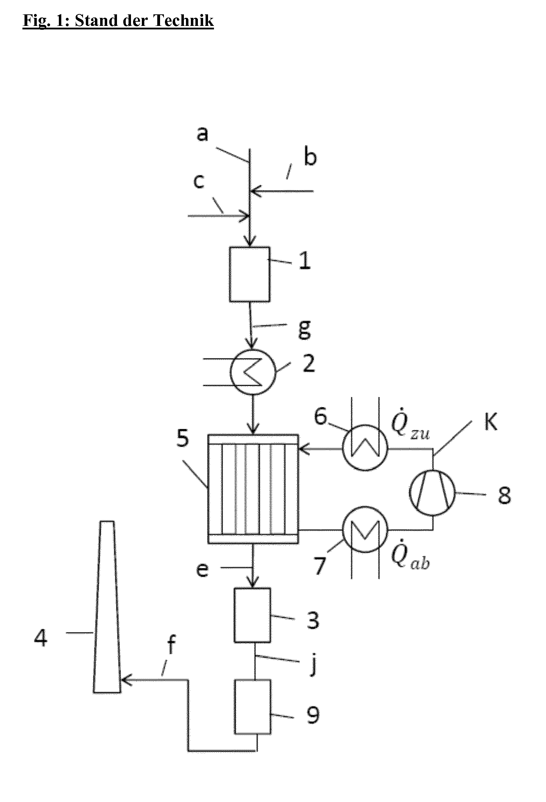

In der Vorrichtung gemäß Fig. 1 wird das SO₂-haltige Abgas über die Zuleitung (a) in den Gastrockner (1) geleitet, nachdem es über die Einspeisungen (b) und (d) mit Sauerstoff und/oder Luft versetzt wurde. Das nun auf einen Wassergehalt unter 0,1 Vol.-% getrocknete SO₂-haltige Gas wird über die Gasleitung (g) wird nach Vorwärmung über den Gasvorwärmer (2) vollständig in den Röhrenkontaktapparat (5) geführt. Das Gas wird anschließend über die Gasleitung (e) zum SO₃-Absorber (3) geführt. Über die Gasleitung (j) gelangt das Gas anschließend zur Endreinigung in den Gaswäscher (9), ehe es über die Gasleitung (f) und Auslass (4) an die Umgebung abgegeben wird.

Nachteilhaft bei dieser Vorrichtung ist vor allem der dem Röhrenkontaktapparat vorgeschaltete Gastrockner, der gegenüber dem erfindungsgemäßen Verfahren bzw. der erfindungsgemäßen Vorrichtung einen erhöhten verfahrenstechnischen und apparativen Aufwand bedingt.

### Beispiel 2 (erfindungsgemäß):

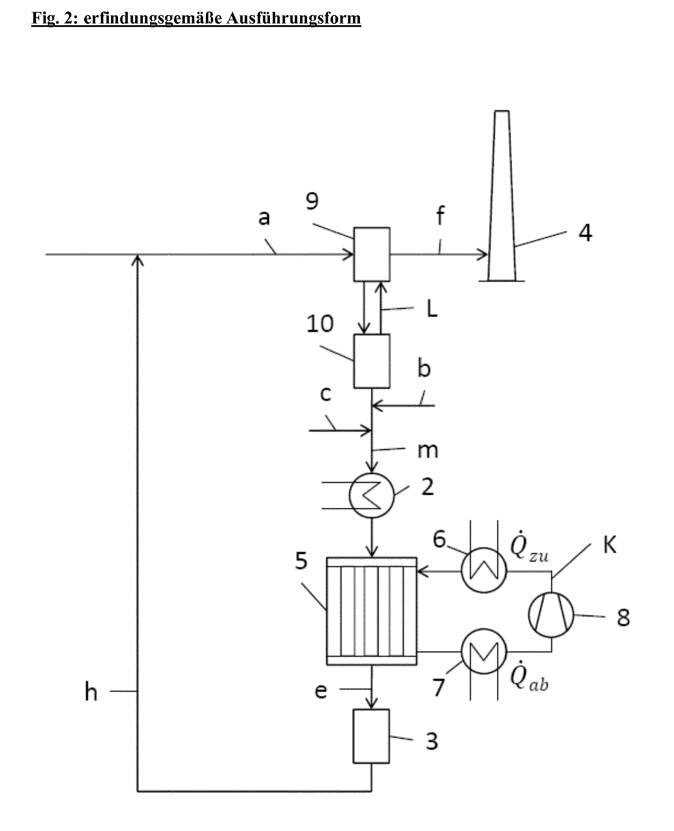

Fig. 2 stellt ein Ausführungsbeispiel des erfindungsgemäßen Verfahrens dar. Dabei wird das SO₂-haltige Abgas über eine Gasleitung (a) in den Gaswäscher (9) geleitet. In diesem wird das Gas soweit von SO₂ gereinigt, dass es über eine Gasleitung (f) und schließlich einen Auslass (4) in die Umwelt abgegeben werden kann.

Die Reinigung des SO₂-haltigen Abgases im Gaswäscher (9) erfolgt durch eine wässrige Waschflüssigkeit. Diese wird nach Beladung mit SO₂ über den Waschflüssigkeitskreislauf (L) in den Desorber (10) geführt, dort von SO₂ befreit, vorzugsweise thermisch, und wieder in den Gaswäscher rückgeführt.

Das im Desorber freigesetzte wasserhaltige SO₂-Reichgas wird über die Gasleitung (m) in den Röhrenkontaktapparat geleitet, wobei dieses SO₂-Reichgas mit Luft (Einspeiseleitung (c) und ggf. Sauerstoff (Einspeiseleitung (b)) angereichert und im Gasvorwärmer (2) auf eine Temperatur von 380 °C bis 480 °C, vorzugsweise 400°C bis 450°C erhitzt wird.

Im Röhrenkontaktapparat (5), der ein stehender Wärmetauscher aus einem oder mehreren Doppelmantelrohren ist, die ein Innenrohr und ein Außenrohr aufweisen, wobei ein Katalysator in den Innenrohren eingefüllt ist und die Wärmeübertragung um diese Innenrohre durch ein im Gleich- oder Gegenstrom geführtes Medium im Zwischenraum aus Innen- und Außenrohr erfolgt, wird nun das SO₂ zu SO₃ oxidiert. Um den Katalysator einerseits aktiv zu halten, andererseits ein thermische Schädigung des Katalysators zu vermeiden, ist der Röhrenkontaktapparat mit einem Zwischenkreislauf umfassend die Kreisleitung (K), den Erhitzer (6), das Gebläse / die Pumpe (8) und den Kühler (7) verbunden, die je nach Bedarf überschüssige Wärme aus dem Röhrenkontaktapparat abführt oder ihm Wärme zuführt.

Das im Röhrenkontaktapparat gebildete SO₃ verlässt diesen über die Gasleitung (e) und wird durch diese in den SO₃-Absorber (3) geführt, in dem das SO₃ in Wasser oder Schwefelsäure zur Bildung von Schwefelsäure bzw. Oleum aufgenommen wird.

Das von SO₃ befreite Gas wird nun über die Gasleitung (h) in die Zuleitung (a) eingespeist und zusammen mit dem SO₂-haltigen Abgas wieder in den Gaswäscher (9) geführt. Möglicherweise vorhandene Reste von SO₂ und/oder SO₃ werden somit wieder dem Kreislauf zugeführt und gelangen nicht in die Umwelt.

### Beispiel 3 (erfindungsgemäß bevorzugt):

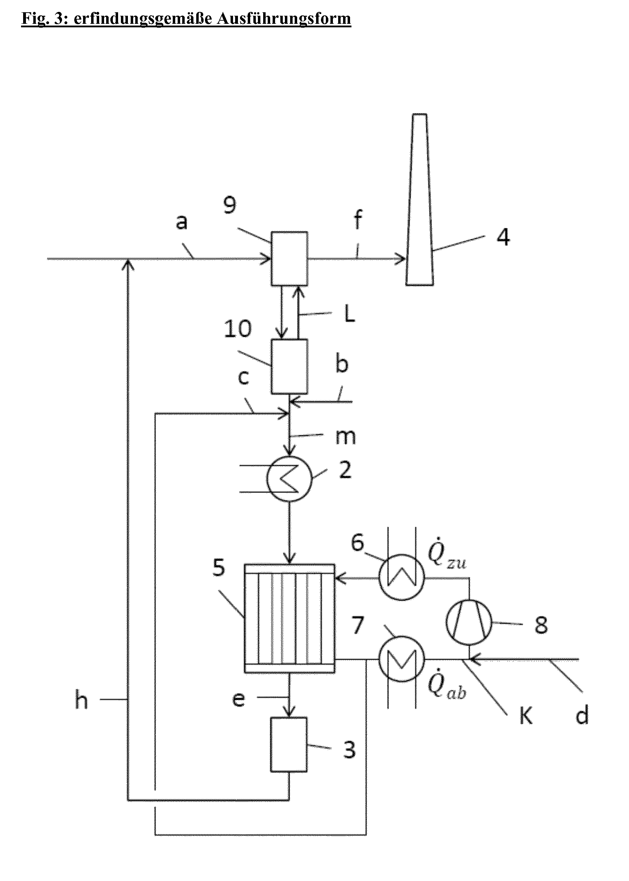

Fig. 3 stellt ein Ausführungsbeispiel des erfindungsgemäßen Verfahrens dar. Dabei wird das SO₂-haltige Abgas über eine Gasleitung (a) in den Gaswäscher (9) geleitet. In diesem wird das Gas soweit von SO₂ gereinigt, dass es über eine Gasleitung (f) und schließlich einen Auslass (4) in die Umwelt abgegeben werden kann.

Die Reinigung des SO₂-haltigen Abgases im Gaswäscher (9) erfolgt durch eine wässrige Waschflüssigkeit. Diese wird nach Beladung mit SO₂ über den Waschflüssigkeitskreislauf (L) in den Desorber (10) geführt, dort von SO₂ befreit, vorzugsweise thermisch, und wieder in den Gaswäscher rückgeführt.

Das im Desorber freigesetzte wasserhaltige SO₂-Reichgas wird über die Gasleitung (m) in den Röhrenkontaktapparat geleitet, wobei dieses SO₂-Reichgas mit Luft (Einspeiseleitung (c) und ggf. Sauerstoff (Einspeiseleitung (b)) angereichert und im Gasvorwärmer (2) auf eine Temperatur von 380 °C bis 480 °C, vorzugsweise 400°C bis 450°C erhitzt wird.

Im Röhrenkontaktapparat (5), der ein stehender Wärmetauscher aus einem oder mehreren Doppelmantelrohren ist, die ein Innenrohr und ein Außenrohr aufweisen, wobei ein Katalysator in den Innenrohren eingefüllt ist und die Wärmeübertragung um diese Innenrohre durch ein im Gleich- oder Gegenstrom geführtes Medium im Zwischenraum aus Innen- und Außenrohr erfolgt, wird nun das SO₂ zu SO₃ oxidiert. Um den Katalysator einerseits aktiv zu halten, andererseits ein thermische Schädigung des Katalysators zu vermeiden, ist der Röhrenkontaktapparat mit einem Zwischenkreislauf umfassend die Kreisleitung (K), den Erhitzer (6), das Gebläse / die Pumpe (8) und den Kühler (7) verbunden, die je nach Bedarf überschüssige Wärme aus dem Röhrenkontaktapparat abführt oder ihm Wärme zuführt.

Die Luft, die dem SO₂-Reichgas vor Eintritt in den Gasvorwärmer (2) zugeben wird, wird der Kreisleitung Zwischenkreislauf (k) über die Zuleitung (c) entnommen und hat daher eine gegenüber der Umgebung deutlich höhere Temperatur. Die der Kreisleitung Zwischenkreislauf (K) entnommene Menge Luft wird dem Kreisleitung Zwischenkreislauf (k) hinter dem in Strömungsrichtung ersten Kühler (7) und vor dem Gebläse (8) wieder über die Einspeiseleitung (d) zugeführt.

Das im Röhrenkontaktapparat gebildete SO₃ verlässt diesen über die Gasleitung (e) und wird durch diese in den SO₃-Absorber (3) geführt, in dem das SO₃ in Wasser oder Schwefelsäure zur Bildung von Schwefelsäure bzw. Oleum aufgenommen wird.

Das von SO₃ befreite Gas wird nun über die Gasleitung (h) in die Zuleitung (a) eingespeist und zusammen mit dem SO₂-haltigen Abgas wieder in den Gaswäscher (9) geführt. Möglicherweise vorhandene Reste von SO₂ und/oder SO₃ werden somit wieder dem Kreislauf zugeführt und gelangen nicht in die Umwelt.

## Patentansprüche

1. Verfahren zur Reinigung eines SO₂-haltigen Abgases umfassend folgende Schritte:
(a) Einleiten des SO₂-haltigen Abgases in einen Gaswäscher und Absorption von SO₂ in der Waschflüssigkeit,
(b) Zuleiten der mit SO₂ beladenen Waschflüssigkeit in den Desorber, Desorption von SO₂ unter Entstehung von SO₂-haltigem Reichgas und Rückleiten der von SO₂ entladenen Waschflüssigkeit in den Gaswäscher,
(c) Zuleiten des SO₂-haltigen Reichgases zum Gasvorwärmer, wobei dem SO₂-haltigen Reichgas vor Eintritt in diesen Luft zugegeben wird,
(d) Erwärmen des mit Luft versetzten SO₂-haltigen Reichgases im Gasvorwärmer,
(e) Oxidation des im SO₂-haltigen Reichgas enthaltenen SO₂ zu SO₃ in einem Röhrenkontaktapparat,
(f) Absorption des entstandenen SO₃ in einem SO₃-Absorber,
(g) Ableiten von nicht im SO₃-Absorber absorbierten Gasen und Zuleiten dieser Gase in das SO₂-haltigen Abgas vor dessen Eintritt in den Gaswäscher,
wobei die Luft, die dem SO₂-haltigen Reichgases vor dem Eintritt in den Gasvorwärmer in Schritt (c) zugeben wird, eine gegenüber der Temperatur des SO₂-haltigen Reichgases deutlich erhöhte Temperatur aufweist.

2. Verfahren nach Anspruch 1, **dadurch gekennzeichnet, dass** das in Schritt (b) entstehende SO₂-haltige Reichgas einen SO₂-Gehalt von 60 bis 99 Vol.-% und einen Wassergehalt von 40 bis 1 Vol.-%, bevorzugt einen SO₂-Gehalt von 80 bis 98,5 Vol.-% und einen Wassergehalt von 20 bis 1,5 Vol.-%, besonders bevorzugt einen SO₂-Gehalt von 90 bis 98 Vol.-% und einen Wassergehalt von 10 bis 2 Vol.-% aufweist.

3. Verfahren nach Anspruch 1 oder 2, **dadurch gekennzeichnet, dass** die Temperatur dieser Luft bei der Zugabe zum SO₂-haltigen Reichgas in Schritt (c) von 300 bis 600 °C, bevorzugt von 380 bis 560 °C, besonders bevorzugt von 400 bis 520 °C beträgt.

4. Verfahren nach einem der Ansprüche 1 bis 4, **dadurch gekennzeichnet, dass** in Schritt (c) durch die Zuleitung von Luft ein O₂/SO₂-Volumenverhältnis von 0,5 bis 1,2, bevorzugt von 0,7 bis 1,1, besonders bevorzugt von 0,9 bis 1,0 eingestellt wird.

5. Verfahren nach einem der Ansprüche 1 bis 5, **dadurch gekennzeichnet, dass** in Schritt (d) das mit Luft versetzte SO₂-haltigen Reichgases im Gasvorwärmer auf eine Temperatur von 380 bis 480 °C, besonders auf eine Temperatur von 400 bis 450 °C erwärmt wird.

6. Verfahren nach einem der Ansprüche 1 bis 6, **dadurch gekennzeichnet, dass** in Schritt (g) das nicht im SO₃-Absorber absorbierte Gas unter 10, bevorzugt unter 5, besonders bevorzugt unter 2 Vol.-%SO₂ enthält.

7. Verfahren nach einem der Ansprüche 1 bis 6, **dadurch gekennzeichnet, dass** das Reichgas vor dem Eintritt in den Röhrenkontaktapparat nicht getrocknet wird.

8. Verfahren nach einem der Ansprüche 1 bis 7 **dadurch gekennzeichnet, dass** die Luft, die dem SO₂-haltigen Reichgas in Schritt (c) vor Eintritt in diesen zugegeben wird, dem Zwischenkreislauf zur Zufuhr und/oder Abfuhr der Wärme zu oder von der Oxidation des SO₂ zu SO₃ im Zwischenraum aus Innen- und Außenrohr des Röhrenkontaktapparats entnommen wird.

9. Verfahren nach einem der Ansprüche 1 bis 8, **dadurch gekennzeichnet, dass** das im Reichgas enthaltene SO₂ mit einem Umsatz von 70 % bis 99,9 % , bevorzugt von 80 % bis 99,5 %, besonders bevorzugt von 90 % bis 99 %, insbesondere von 93 bis 97 % zu SO₃ umgewandelt wird.

10. Vorrichtung zur Durchführung des Verfahrens nach einem der Ansprüche 1 bis 9, **dadurch gekennzeichnet, dass** die Vorrichtung folgende Komponenten aufweist: eine Zuleitung für das SO₂-haltige Abgas zum Gaswäscher, einen ersten Absorber zur Absorption des SO₂ in einer Waschflüssigkeit, einen Desorber zur Desorption des SO₂ aus der Waschflüssigkeit, wobei Gaswäscher und Desorber über einen Waschmittelkreislauf miteinander verbunden sind, eine Zuleitung für das im Desorber entstandene SO₂-Reichgases zum Röhrenkontaktapparat, wobei diese Zuleitung eine Einspeisung für Luft vorsieht, einen Röhrenkontaktapparat, einen SO₃-Absorber zur Absorption des im Röhrenkontaktapparat gebildeten SO₃, eine Rückführleitung zur Rückführung des Gasstroms aus dem SO₃-Absorber in die Zuleitung für das SO₂-haltige Abgas zum Gaswäscher.

11. Vorrichtung nach Anspruch 10, **dadurch gekennzeichnet, dass** der Röhrenkontaktapparat einen Zwischenkreislauf zur Zufuhr oder/und Abfuhr von Wärme zu oder von der Oxidation des SO₂ zu SO₃ aufweist.

12. Vorrichtung nach Anspruch 11, **dadurch gekennzeichnet, dass** der Zwischenkreislauf einen Kühler, ein Gebläse oder eine Pumpe und/oder einen Erhitzer aufweist.

13. Vorrichtung nach einem der Ansprüche 9 bis 12, **dadurch gekennzeichnet, dass** sie keinen Apparat zur Kondensation der aus dem gebildeten SO₃ entstandenen Schwefelsäure aufweist.

14. Vorrichtung nach einem der Ansprüche 9 bis 13, **dadurch gekennzeichnet, dass** sie keine Apparat zur Gastrocknung aufweist.

15. Vorrichtung nach einem der Ansprüche 9 bis 14, **dadurch gekennzeichnet, dass** sie eine Einspeiseleitung für vorgewärmte Luft, die dem SO₂-Reichgas vor Eintritt in den Gasvorwärmer zugeben wird, aufweist, wobei diese Einspeiseleitung an die Kreisleitung des Zwischenkreislaufs angeschlossen ist.
